(19) Europäisches Patentamt
European Patent Office
Office européen des brevets

(11) **EP 4 723 530 A1**

(12) **EUROPEAN PATENT APPLICATION**
published in accordance with Art. 153(4) EPC

(43) Date of publication:
**08.04.2026 Bulletin 2026/15**

(21) Application number: **24814581.5**

(22) Date of filing: **31.05.2024**

(51) International Patent Classification (IPC):
**H04L 5/00** (2006.01)

(52) Cooperative Patent Classification (CPC):
**H04L 1/1812; H04L 5/00**

(86) International application number:
**PCT/CN2024/096600**

(87) International publication number:
**WO 2024/245387 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 CN 202310649642**

(71) Applicant: **Datang Mobile Communications
Equipment Co., Ltd.
Beijing 100085 (CN)**

(72) Inventors:
• **WANG, Junwei
Beijing 100085 (CN)**
• **GAO, Xuejuan
Beijing 100085 (CN)**

(74) Representative: **Studio Torta S.p.A.
Via Viotti, 9
10121 Torino (IT)**

(54) **DATA TRANSMISSION METHOD AND APPARATUS, AND TERMINAL AND NETWORK DEVICE**

(57) This disclosure provides a data transmission method and apparatus, terminal, and network device, and relates to the field of communications technology. The data transmission method includes: receiving a first scheduling signaling sent by a network device; determining, based on the first scheduling signaling, a transmission parameter for scheduled target data; and performing transmission of the target data based on the transmission parameter for the target data; wherein the transmission parameter includes at least one of the following: a transmission carrier for the target data; a circular buffer length value for the target data; or a new transmission or retransmission identifier for the target data.

Receiving a first scheduling signaling sent by a network device — S501

Determining a transmission parameter for scheduled target data based on the first scheduling signaling — S502

Performing transmission of the target data based on the transmission parameter for the target data — S503

Fig. 5

## Description

### CROSS-REFERENCE TO RELATED APPLICATION

This application claims priority to Chinese patent application No. 202310649642.3, filed with the CNIPA on June 2, 2023, and titled "data transmission method and apparatus, and terminal and network device", disclosure of which is incorporated herein by reference in its entirety.

### TECHNICAL FIELD

The present disclosure relates to the field of communication technology, and in particular to a data transmission method and apparatus, terminal, and network device.

### BACKGROUND

Conventional New Radio (NR) systems are designed to support large single-carrier bandwidth (for example, a maximum bandwidth of 50 MHz is supported when the sub-carrier spacing (SCS) is 15 KHz, a maximum bandwidth of 100 MHz is supported when SCS is 30 KHz, and a maximum bandwidth of 400 MHz is supported when SCS is 120 KHz), to meet the demand for high-speed communication of enhanced mobile broadband (eMBB) services in the fifth-generation (5G) era.

In real-world communications deployments, sub-6G remains the primary frequency band for NR systems, particularly the sub-1 GHz 700/800/900 MHz bands, which are prime frequency bands for 5G deployment. However, these prime/primary frequency bands are fragmented. If the fragmented frequencies distributed in the different frequency bands are used in the way of traditional carrier aggregation (CA), user equipments (UEs) and base stations have to support more powerful receive and transmit capabilities (e.g., the RF front-end capability of supporting multi-band simultaneous reception and transmission, and baseband processing capability of supporting more aggregated carriers). Therefore, achieving flexible and efficient data transmission remains a pressing challenge.

### SUMMARY

Embodiments of the present disclosure provide a data transmission method and apparatus, terminal, and network device to achieve the goal of ensuring flexible and efficient data transmission.

In order to solve the above technical problems, an embodiment of the present disclosure provides a data transmission method, which is performed by a terminal, including:

receiving a first scheduling signaling sent by a network device;
determining, based on the first scheduling signaling, a transmission parameter for scheduled target data;
performing transmission of the target data based on the transmission parameter for the target data;
wherein the transmission parameter includes at least one of the following:

a transmission carrier for the target data;
a circular buffer length value for the target data; or
a new transmission or retransmission identifier for the target data.

In some embodiments, determining the transmission parameter for scheduled target data includes:

determining, based on the first scheduling signaling and first configuration information of at least one carrier set sent by the network device, the transmission parameter for the scheduled target data;
wherein the first configuration information includes at least one of the following:

information of carriers included in the carrier set;
shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or

dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, determining the new transmission or retransmission identifier for the target data includes at least one of the following:

determining the new transmission or retransmission identifier for the target data according to at least one of a first transmission carrier, a first HPN, or a first NDI indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, determining the new transmission or retransmission identifier for the target data according to at least one of the first transmission carrier, the first HPN, or the first NDI indicated by the first scheduling signaling includes at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

in a case that the first NDI and the second NDI are inconsistent, determining that the target data is a new transmission; or
in a case that the first NDI is consistent with the second NDI, determining that the target data is a retransmission.

In some embodiments, determining the circular buffer length value for the target data includes at least one of the following:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition corresponding to all carriers in the shared HPN carrier subset to which a transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, wherein the shared HPN indication information is used for indicating target carrier information that shares the HPN with the transmission carrier for the target data scheduled by the first scheduling signaling.

An embodiment of the present disclosure also provides a data transmission method, which is performed by a network device and includes:

determining a transmission parameter for scheduled target data;

performing transmission of the target data based on the transmission parameter for the target data;

wherein the transmission parameter includes at least one of the following:

a transmission carrier for the target data;

a circular buffer length value for the target data; or

a new transmission or retransmission identifier for the target data.

In some embodiments, determining the transmission parameter for scheduled target data includes:

determining, based on the first scheduling signaling and first configuration information of at least one carrier set, the transmission parameter for the scheduled target data;

wherein the first configuration information includes at least one of the following:

information of carriers included in the carrier set;

shared hybrid automatic repeat request process number (HPN) carrier subset;

HPN sharing mode; or

indication information of scheduled carriers in the carrier set.

In some embodiments, the HPN sharing mode includes at least one of the following:

semi-static mode; or

dynamic mode.

In some embodiments, the indication information of scheduled carriers includes at least one of the following:

a subset of carriers in the carrier set that can be received simultaneously or sent simultaneously; or

indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, determining the new transmission or retransmission identifier for the target data includes at least one of the following:

determining the new transmission or retransmission identifier for the target data according to at least one of a first transmission carrier, a first HPN, or a first NDI indicated by the first scheduling signaling; or

determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling; wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, determining the new transmission or retransmission identifier for the target data according to at least one of the first transmission carrier, the first HPN, or the first NDI indicated by the first scheduling signaling includes at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

in a case that the first NDI and the second NDI are inconsistent, determining that the target data is a new transmission; or
in a case that the first NDI is consistent with the second NDI, determining that the target data is a retransmission.

In some embodiments, determining the circular buffer length value for the target data includes at least one of the following:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;
obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;
obtaining, according to a first indication in the first scheduling signaling, the circular buffer length value for the target data, wherein the first indication is used for indicating a carrier bandwidth used by the circular buffer length value for the target data; or
obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

An embodiment of the present disclosure also provides a terminal, including a memory, a transceiver, and a processor; wherein
the memory is configured to store a computer program; the transceiver is configured to transmit and receive data under the control of the processor; and the processor is configured to read the computer program in the memory and perform the following steps:

receiving, through the transceiver, a first scheduling signaling sent by a network device;
determining, based on the first scheduling signaling, a transmission parameter for scheduled target data;
performing transmission of the target data based on the transmission parameter for the target data;
wherein the transmission parameter includes at least one of the following:

a transmission carrier for the target data;
a circular buffer length value for the target data; or
a new transmission or retransmission identifier for the target data.

In some embodiments, the processor is configured to read the computer program in the memory to further perform the following step:

determining, based on the first scheduling signaling and first configuration information of at least one carrier set sent by the network device, the transmission parameter for the scheduled target data;
wherein the first configuration information includes at least one of the following:

information of carriers included in the carrier set;

shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.
In some embodiments, the processor is configured to read the computer program in the memory and perform the following steps:

determining the new transmission or retransmission identifier for the target data according to at least one of a first transmission carrier, a first HPN, or a first NDI indicated by the first scheduling signaling;
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the processor is configured to read the computer program in the memory and perform at least one of the following steps:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, the processor is configured to read the computer program in the memory and perform at least one of the following steps:

in a case that the first NDI and the second NDI are inconsistent, determining that the target data is a new transmission; or
in a case that the first NDI is consistent with the second NDI, determining that the target data is a retransmission.

In some embodiments, the processor is configured to read the computer program in the memory and perform at least one of the following steps:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;
obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;
obtaining, according to a first indication in the first scheduling signaling, the circular buffer length value for the target data, wherein the first indication is used for indicating a carrier bandwidth used by the circular buffer length value for the target data; or
obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

An embodiment of the present disclosure also provides a network device, including a memory, a transceiver, and a processor, wherein
the memory is configured to store a computer program; the transceiver is configured to transmit and receive data under the control of the processor; and the processor is configured to read the computer program in the memory and perform the following steps:

determining a transmission parameter for scheduled target data;
performing transmission of the target data based on the transmission parameter for the target data;
wherein the transmission parameter includes at least one of the following:

a transmission carrier for the target data;
a circular buffer length value for the target data; or
a new transmission or retransmission identifier for the target data.

In some embodiments, the processor is configured to read the computer program in the memory to further perform the following step:

determining, based on the first scheduling signaling and first configuration information of at least one carrier set, the transmission parameter for the scheduled target data;
wherein the first configuration information includes at least one of the following:

information of carriers included in the carrier set;

shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, the processor is configured to read the computer program in the memory and perform at least one of the following steps:

determining the new transmission or retransmission identifier for the target data according to at least one of a first transmission carrier, a first HPN, or a first NDI indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the processor is configured to read the computer program in the memory and perform at least one of the following steps:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, the processor is configured to read the computer program in the memory and perform at least one of the following steps:

in a case that the first NDI and the second NDI are inconsistent, determining that the target data is a new transmission; or
in a case that the first NDI is consistent with the second NDI, determining that the target data is a retransmission.

In some embodiments, the processor is configured to read the computer program in the memory and perform at least one of the following steps:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

An embodiment of the present disclosure also provides a data transmission apparatus, applied to a terminal, including:

a receiving unit, configured to receive a first scheduling signaling sent by a network device;

a first determining unit, configured to determine, based on the first scheduling signaling, a transmission parameter for scheduled target data; and

a first transmission unit, configured to perform transmission of the target data based on the transmission parameter for the target data;

wherein the transmission parameter includes at least one of the following:

a transmission carrier for the target data;

a circular buffer length value for the target data; or

a new transmission or retransmission identifier for the target data.

An embodiment of the present disclosure also provides a data transmission apparatus, which is applied to a network device and includes:

a second determining unit, configured to determine a transmission parameter for scheduled target data;

a second transmission unit, configured to perform transmission of the target data based on the transmission parameter for the target data;

wherein the transmission parameter includes at least one of the following:

a transmission carrier for the target data;

a circular buffer length value for the target data; or

a new transmission or retransmission identifier for the target data.

An embodiment of the present disclosure further provides a processor-readable storage medium, wherein the processor-readable storage medium stores a computer program, and the computer program is configured to cause a processor to implement the above method.

The present disclosure has the following beneficial effects.

The above solution performs transmission of the target data based on the transmission carrier for the target data, the circular buffer length value for the target data and/or the new transmission or retransmission identifier for the target data, thereby ensuring flexible and efficient transmission of data.

## BRIEF DESCRIPTION OF THE DRAWINGS

In order to more clearly illustrate the technical solutions in the embodiments of the present disclosure or related technologies, the following briefly introduces the drawings required for use in the embodiments or related technical descriptions. Obviously, the drawings described below are only some embodiments set forth in the present disclosure. For those of ordinary skill in the art, other drawings can be obtained based on these drawings without making any creative efforts.

Fig. 1 is a structural diagram of a network system to which embodiments of the present disclosure are applicable;

Fig. 2 is a schematic diagram of switching between two carriers in 1 channel;

Fig. 3 is a schematic diagram of delayed carrier switching;

Fig. 4 is a schematic diagram of two instances of carrier switching;

Fig. 5 is a flow chart of a data transmission method according to an embodiment of the present disclosure;

Fig. 6 is a schematic diagram showing the process of determining data initial transmission/retransmission based on HPN sharing;

Fig. 7 is a schematic diagram of dynamic switching of receiving carriers;

Fig. 8 is a schematic diagram of indicating HPN sharing carrier by using DCI;

Fig. 9 is a schematic diagram of dynamic switching based on carrier groups;

Fig. 10 is a schematic diagram showing a terminal configured with multiple carrier sets;

Fig. 11 is another flow chart of a data transmission method according to an embodiment of the present disclosure;

Fig. 12 is a modular diagram of a data transmission apparatus according to an embodiment of the present disclosure;

Fig. 13 is a structural diagram of a terminal according to an embodiment of the present disclosure;

Fig. 14 is another modular diagram of a data transmission apparatus according to an embodiment of the present disclosure;

Fig. 15 is a structural diagram of a network device according to an embodiment of the present disclosure.

## DETAILED DESCRIPTION

The following will clearly and completely describe the technical solutions in the embodiments of the present disclosure in conjunction with the accompanying drawings. Obviously, the described embodiments are only part of the embodiments of the present disclosure, not all of them. All other embodiments obtained by those of ordinary skill in the art based on the embodiments of the present disclosure without making any creative efforts shall fall within the scope of the present disclosure.

The terms "first", "second" and the like in the specification and claims of the present disclosure are used to distinguish similar objects and are not necessarily used to describe a particular order or sequence. It should be understood that the terms used in this manner are interchangeable where appropriate so that the embodiments of the present disclosure described herein may be implemented in a sequence other than those illustrated or described herein. In addition, the terms "including" and "comprising" and any variations thereof, are intended to cover non-exclusive inclusions, e.g., a process, method, system, product, or apparatus including a series of steps or units is not necessarily limited to those steps or units explicitly listed, but may include other steps or units that are not explicitly listed or that are inherent to such processes, methods, products, or apparatus.

In the embodiments of the present disclosure, the term "and/or" describes the relationship between associated objects, indicating that three possible relationships exist. For example, A and/or B can represent three situations: A exists alone, A and B exist simultaneously, and B exists alone. The character "/" generally indicates that the associated objects are in an "or" relationship. In the embodiments of the present disclosure, the term "plurality" refers to two or more, and other quantifiers are similar.

In the embodiments of the present disclosure, terms such as "exemplary" or "for example" are used to indicate examples, illustrations, or descriptions. Any embodiment or implementation described as "exemplary" or "for example" in the embodiments of the present disclosure should not be construed as being preferred or advantageous over other embodiments or implementations. Rather, the use of terms such as "exemplary" or "for example" is intended to present the relevant concepts in a concrete manner.

The following describes embodiments of the present disclosure with reference to the accompanying drawings. The data transmission methods, apparatuses, terminals, and network devices provided in the embodiments of the present disclosure can be applied to wireless communication systems. The wireless communication systems may be systems employing fifth-generation (5G) mobile communication technology (hereinafter referred to as 5G systems). Those skilled in the art will appreciate that the 5G NR system is merely an example and not a limitation.

The carrier described in this disclosure may also be expressed as a cell, a serving cell, a band, or a common frequency resource (CFR).

The target data described in this disclosure may be unicast service data, multicast service data, or broadcast service data.

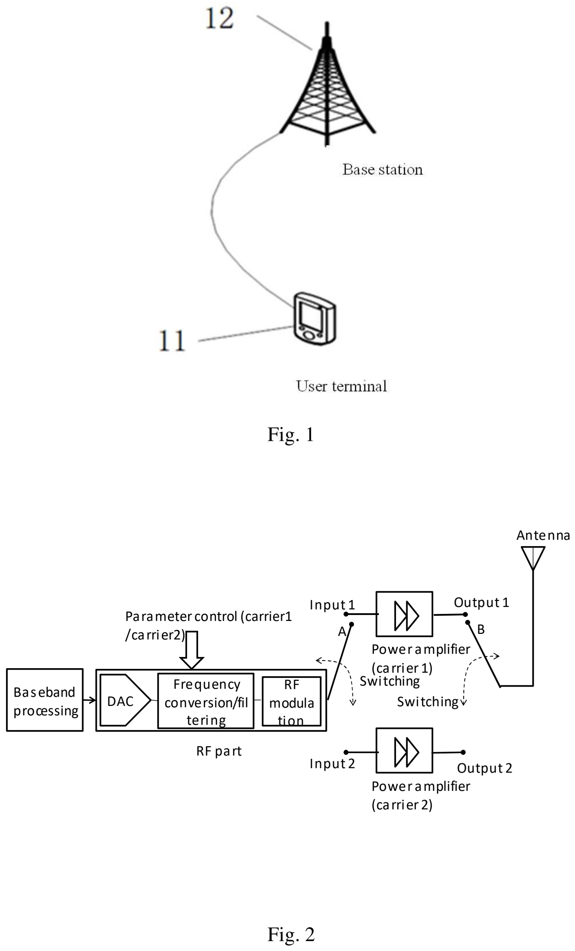

Referring to Fig. 1, Fig. 1 is a structural diagram of a network system to which embodiments of the present disclosure are applicable. As shown in Fig. 1, the network system includes a user terminal 11 and a base station 12. The user terminal 11 may be a user equipment (UE), for example, a terminal side device such as a mobile phone, tablet personal computer, laptop computer, personal digital assistant (PDA), mobile Internet device (MID), or wearable device. It should be noted that the specific type of user terminal 11 is not limited in the embodiments of the present disclosure. Base station 12 may be a 5G or later base station (e.g., gNB, 5G NR NB), or a base station in other communication systems, also known as a Node B. It should be noted that the embodiments of the present disclosure use a 5G base station as an example, and the specific type of base station 12 is not limited.

First, some technical terms that may be involved in the technical solutions provided by the present disclosure are introduced.

1. Uplink carrier switching

In the uplink sending of the terminal in the NR system, the selective sending over carriers in multiple bands (i.e., uplink carrier switching-based sending) is supported, the main purpose of which is to enhance the wireless coverage capability of the cell.

For example: when the terminal is in the center of a cell, the terminal is close to the base station and uses a carrier in a higher frequency band for communication (for example, carrier-1 of 3.5 GHz 2TX MIMO, with a bandwidth of 100 MHz). This allows for a higher data transmission rate.

When a terminal is at the edge of the cell, the terminal is far away from the base station and uses a carrier in a lower frequency band for communication (for example, carrier-1 of 2.1 GHz, with a bandwidth of 20 MHz). This can achieve a certain level of performance in terms of coverage quality.

Uplink switching between carriers in two different bands is supported. A simple terminal structure model and switching process are as shown in Fig. 2. During terminal uplink communication, inter-carrier switching may occur.

When a signal or channel is sent on carrier 1, the radio frequency (RF) control parameters adopt the values related to carrier 1. The output point A of the RF part switches to the power amplifier input point 1 of carrier 1, and the power amplifier output 1 switches to antenna B.

When a signal or channel is sent on carrier 2, the RF control parameters adopt the values related to carrier 2. The output point A of the RF part switches to the power amplifier input point 2 of carrier 2, and the power amplifier output 2 switches to antenna B.

2. Hybrid Automatic Repeat Request (HARQ) mechanism for data transmission

In wireless communication environments, channel quality fluctuates rapidly, that is, data transmission errors are likely to occur. To improve data transmission reliability and meet the varying transmission quality requirements of different services, technical standards adopt the HARQ process (Hybrid Automatic Repeat Request). This process involves the receiver decoding the received data and feeding the decoding result back to the transmitter. If the decoding result is correct, an Acknowledgement (ACK) is fed back; if the decoding result is erroneous, a Negative Acknowledgement (NACK) is fed back. The data transmitter then determines whether to retransmit the data based on the received feedback. Generally, if the feedback received by the data transmitter is a NACK, the transmitter retransmits the data. If the received feedback is an ACK, the transmitter does not retransmit the data, and transmission of the data ends.

It should be noted that the retransmission in the HARQ process is for the same HARQ process number (HPN) of the same scheduled cell (or carrier). That is, the initial transmission and retransmission of data cannot cross different carriers or different HPNs. The new data indicator (NDI) is used for indicating whether the transmission is a retransmission or an initial transmission. The determination method is divided into the following two steps:

1: firstly, determine whether the NDI value is flipped, that is, compare the NDI value with the NDI of the previous DCI; if the two NDIs are different, it is determined that the NDI is flipped, otherwise, it is determined that the NDI is not flipped;

2: determine whether the transmission is an initial transmission or a retransmission based on the flip; if it is determined that the NDI is flipped, the transmission is considered an initial transmission; otherwise, the transmission is considered a retransmission; when the transmission is a retransmission, the terminal needs to merge the data transmitted this time with the data transmitted last time to improve the probability of correct decoding.

Considering that there are a large number of fragmented spectrums in the wireless spectrum that can be actually allocated in the NR system in the related art and the spectrum that will be re-farmed from other systems in the future, how to effectively use these fragmented spectrums is a problem to be solved by NR evolution technology.

The traditional method is to use the traditional CA method, which requires the terminal and base station to support more powerful receiving or transmitting capabilities, e.g., the RF front-end capability of supporting multi-band simultaneous reception and transmission, and baseband processing capability of supporting more aggregated carriers.

In addition, for carrier switching, the HARQ process is performed based on the same HPN of the same carrier. No matter how the unsuccessfully transmitted data is handled, the user experience will be degraded, as follows:

if the switching is not performed until the data is correctly transmitted, it will affect the optimal switching time and cause switching delays;

if the switching is performed before the data is correctly transmitted, the retransmission delay of the data packet will be too large, and a second switching will be required, which will reduce the resource utilization efficiency of air interface.

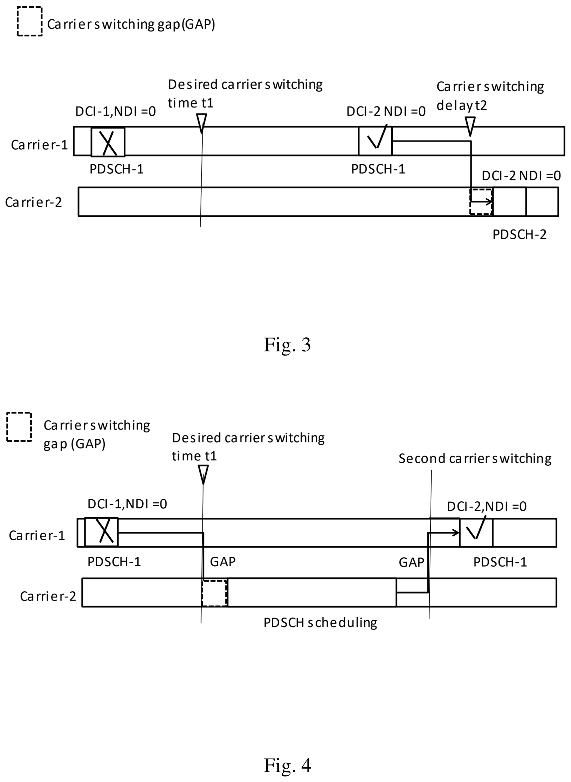

For example, as shown in Fig. 3, an initial transmission scheduling signaling downlink control information (DCI) is received on carrier-1, the DCI schedules the physical downlink shared channel (PDSCH), that is, DCI-1 schedules PDSCH-1, and the terminal fails to decode it. Because the base station needs to use DCI-2 to schedule the retransmission of PDSCH-1 before carrier switching, to ensure correct reception of PDSCH-1 and reduce transmission delay of PDSCH-1, the base station cannot perform the switching at the desired carrier switching time t1 (e.g., the channel quality of carrier-1 is already deteriorating, and it is necessary to switch to carrier-2, where the channel quality is better, to perform data transmission). However, retransmitting PDSCH-1 on carrier-1 would reduce transmission efficiency. As shown in Fig. 4, an initial transmission scheduling signaling DCI-1 is received on carrier-1, the DCI schedules PDSCH-1, and the terminal fails to decode it. The base station performs the switching at the desired carrier switching time t1 (because the channel quality of carrier-1 is already deteriorating, and it is necessary to switch to carrier-2, where the channel quality is better). After the terminal completes carrier switching, the terminal performs data transmission on carrier-2 and then switches to carrier-1 at an appropriate time (e.g., t2) to perform retransmission scheduling of PDSCH-1. This process results in excessive PDSCH-1 retransmission delays and performs two switching processes, reducing air interface scheduling efficiency.

Based on the analysis, embodiments of the present disclosure provide a data transmission method and apparatus, terminal, and network device to achieve the goal of effectively utilizing an increasing number of fragmented spectrums without increasing the requirement on the capabilities of the terminal and the base station.

The method and the apparatus are based on the same creative concept. Since the principles of solving problems by the method and the apparatus are similar, for the implementation of one of the apparatus and method, reference can be made to the other of the apparatus and method, and the repeated description will be omitted.

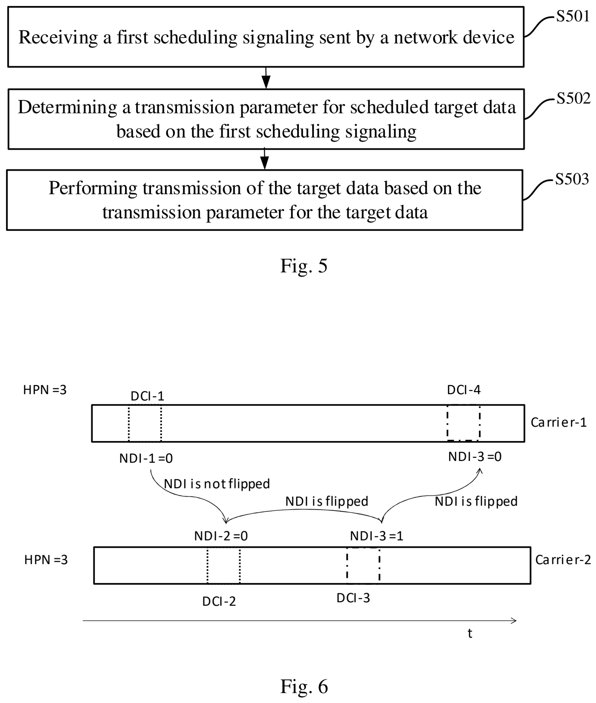

As shown in Fig. 5, an embodiment of the present disclosure provides a data transmission method, which is performed by a terminal and includes:

step S501: receiving a first scheduling signaling sent by a network device;

step S502: determining a transmission parameter for scheduled target data based on the first scheduling signaling; wherein the transmission parameter includes at least one of the following:

A11, a transmission carrier for the target data;
A12, the circular buffer length value for the target data; or
A13, a new transmission or retransmission identifier (ID) for the target data;

step S503: performing transmission of the target data based on the transmission parameter for the target data.

It should be noted that, transmission of the target data is performed based on the transmission carrier for the target data, the circular buffer length value for the target data and/or the new transmission or retransmission identifier for the target data, thereby ensuring flexible and efficient data transmission.

In some embodiments, the terminal may receive downlink data (e.g., PDSCH) or send uplink data (e.g., Physical Uplink Shared Channel (PUSCH)).

In some embodiments, a specific implementation of determining the transmission parameter for scheduled target data includes:

determining, according to the first scheduling signaling and first configuration information of at least one carrier set sent by the network device, the transmission parameter for scheduled target data.

The first configuration information includes at least one of the following B11, B12, B13 and B14.

B11. information of carriers included in the carrier set.

In some embodiments, the carrier information may include the number of carriers included in the set, and carrier identifiers corresponding to the carriers included in the set.

B12. shared hybrid automatic repeat request process number (HPN) carrier subset.

It should be noted that the shared HPN carrier subset is used for indicating carriers that can share the HPN.

In some embodiments, the shared HPN carrier subset may include the number of carriers sharing the HPN, and carrier identifiers corresponding to the carriers sharing the HPN.

It should be noted that, sharing the HPN may refer to: the HPN sharing between uplink carrier sending switches, and the HPN sharing between downlink carrier reception switches.

B13, HPN sharing mode.

It should be noted that the HPN sharing mode is used for indicating a manner in which the network configures carriers capable of sharing the HPN.

In some embodiments, the HPN sharing mode includes at least one of the following B131 and B132.

B131, semi-static mode.

It should be noted that, generally, when the HPN sharing mode is the semi-static mode, the first configuration information also configures a shared HPN carrier subset. That is, in the case of the semi-static mode, the network device configures the carriers that can share the HPN through Radio Resource Control (RRC) signaling.

B132, dynamic mode.

It should be noted that if the HPN sharing mode is dynamic, the network device needs to dynamically indicate, in scheduling signaling, which is the currently scheduled carrier and which carriers share the HPN. This approach can be understood as dynamically indicating the shared HPN carrier subset via scheduling signaling. That is, in dynamic mode, the network device configures the carriers capable of sharing the HPN via scheduling signaling (e.g., DCI signaling). In some embodiments, the first scheduling signaling includes shared HPN indication information, which indicates target carrier information that shares the HPN with the transmission carrier for the target data scheduled by the first scheduling signaling.

B14. indication information of scheduled carriers in the carrier set.

In some embodiments, the indication information of scheduled carriers includes at least one of the following B141 and B142.

B141, a subset of carriers in a carrier set that can be received or transmitted simultaneously.

It should be noted that the carriers included in the carrier subset can be received simultaneously or transmitted simultaneously. For example, for a terminal, the carrier subset includes: carriers that are sent in the uplink direction at the same time, or carriers that are received in the downlink direction at the same time.

B142. Indication information of a transmission mode for target data transmission, wherein the transmission mode includes at least one of the following: single-processor mode or multi-processor mode.

It can be understood that the transmission mode refers to a transmission mode in which target data transmission is performed on multiple carriers in the subset of carriers that can be received or sent simultaneously.

The single-processor mode can be understood as using only one processor to serially process target data on multiple carriers, and the multi-processor mode can be understood as using multiple processors to parallelly process target data on multiple carriers.

It should be noted that the single-processor (singleP) mode corresponds to the first PDSCH reception preparation duration. This means that in the single-processor mode, the first PDSCH reception preparation duration is required for the slot when the terminal receives the PDSCH and feeds back the HARQ-ACK. The multi-processor mode corresponds to the second PDSCH reception preparation duration. This means that in multi-processor (MultiP) mode, the second PDSCH reception preparation duration is required for the slot when the terminal receives the PDSCH and feeds back the HARQ-ACK. Specifically, the first PDSCH reception preparation duration is greater than the second PDSCH reception preparation duration. In other words, the single-processor mode processes different carriers serially, resulting in a relatively longer reception preparation duration, while the multi-processor mode may process different carriers in parallel, resulting in a relatively shorter reception preparation duration.

It should be noted that the first configuration information can assist the terminal in determining the transmission parameter for the target data; through the indication of the first configuration information, the terminal can know which carriers can be transmitted simultaneously and which carriers can share HPN, so as to ensure the consistency of the transmission parameters calculated on the base station and those calculated on the terminal, and can utilize fragmented frequency bands during data transmission. At the same time, it can also allow the base station or terminal to maintain its original capabilities without increasing the requirements on the capabilities of the terminal and the base station.

In some embodiments, a specific implementation of determining the new transmission or retransmission identifier for the target data includes at least one of the following C11 and C12.

C11. determining the new transmission or retransmission identifier for the target data according to at least one of a first transmission carrier, a first HPN, or a first NDI indicated by the first scheduling signaling.

In some embodiments, the first transmission carrier belongs to a first shared HPN carrier subset.

In some embodiments, the specific implementation of determining the new transmission or retransmission identifier for the target data according to at least one of the first transmission carrier, the first HPN, or the first NDI indicated by the first scheduling signaling includes at least one of the following C111, C112 and C113.

C111. in a case that the scheduling of the first transmission carrier by the first scheduling signaling is the initial scheduling of the shared HPN carrier subset, determine that the target data is a new transmission.

It should be noted that, when the first scheduling signaling is the first time to schedule the first HPN, if the scheduling of the first transmission carrier by the first scheduling signaling is the first scheduling of the carrier in the shared HPN carrier subset, then the target data is directly determined to be a new transmission (also called an initial transmission), which can also be understood as the first NDI flip in the first scheduling signaling.

C112: in a case that the scheduling of the first transmission carrier by the first scheduling signaling is not the initial scheduling of the shared HPN carrier subset, and the value of the first NDI is flipped, determine that the target data is a new transmission.

C113: in a case that the scheduling of the first transmission carrier by the first scheduling signaling is not the initial scheduling of the shared HPN carrier subset, and the value of the first NDI is not flipped, determine that the target data is a retransmission.

It should be noted that if the first scheduling signaling is not the first scheduling of the first HPN, it is necessary to determine whether the first NDI is flipped. If flipped, the target data is a new transmission; otherwise, the target data is a retransmission.

In some embodiments, the shared HPN carrier subset may be indicated in the first configuration information; in some embodiments, the shared HPN carrier subset may also be determined by the terminal based on the shared HPN indication information carried in the first scheduling signaling. Specifically, the shared HPN indication information is used for indicating the target carrier information sharing the HPN with the transmission carrier for the target data scheduled by the first scheduling signaling.

C12. determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;

wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

C121. in a case that the first NDI and the second NDI are inconsistent, determining that the target data is a new transmission; or

C122. in a case that the first NDI is consistent with the second NDI, determine that the target data is a retransmission.

It should be noted that if the first scheduling signaling is not the first scheduling of the first HPN, and the transmission carrier indicated by the first scheduling signaling shares the HPN with the transmission carrier indicated by the scheduling signaling scheduling the first HPN last time, it is necessary to determine whether the first NDI in the first scheduling signaling is flipped to determine whether the target data is a new transmission or a retransmission. That is, if the first NDI and the second NDI are inconsistent, the target data is a new transmission; if the first NDI and the second NDI are consistent, it is determined that the target data is a retransmission.

In some embodiments, a specific implementation of determining the circular buffer length value for the target data includes at least one of the following D11 to D16.

D11. obtaining the circular buffer length value for the target data through a carrier parameter corresponding to the transmission carrier for the target data scheduled by the first scheduling signaling.

It should be noted that this situation can be understood as the carrier parameter corresponding to the transmission carrier for the target data is used to calculate the circular buffer length value for the target data.

D12. obtaining a circular buffer length value for the target data by using a carrier parameter corresponding to a reference carrier in the shared HPN carrier subset to which a transmission carrier for the target data scheduled by the first scheduling signaling belongs.

It should be noted that this situation can be understood as no matter which carrier the current target data is transmitted on, the carrier parameter corresponding to the reference carrier in the shared HPN carrier subset to which the target data transmission carrier belongs is used to calculate the circular buffer length value for the target data.

For example, a shared HPN carrier subset includes carrier 1, carrier 2, and carrier 3. The reference carrier in the shared HPN carrier subset can be indicated by the network device or defined by the protocol. For example, if the network device indicates that carrier 1 is the reference carrier, when the target data is transmitted on carrier 2, the terminal and the base station need to calculate the circular buffer length value based on the carrier parameter corresponding to carrier 1.

For example, a method of calculating the circular buffer length value through the carrier parameter corresponding to carrier 1 is as shown in Formula 1:

$$\text{Formula 1} \quad N_{ref} = \left\lfloor \frac{TBS_{LBRM}}{C \cdot R_{LBRM}} \right\rfloor;$$

wherein, $N_{ref}$ is the circular buffer length value, $TBS_{LBRM}$ is the coding rate corresponding to carrier 1; $R_{LBRM}$ is the maximum transmission data length corresponding to carrier 1 $R_{LBRM}$ = 2/3; C is the number of segmented code blocks; $TBS_{LBRM}$ is calculated as follows: $TBS_{LBRM}$ = func(R, Q_m, v, N_{RE}), where func () is determined according to the transport block length calculation process; R is the coding rate, which is 948/1024; $Q_m$ is the modulation order, which is determined according to the mcs-Table parameter of carrier 1 configured by the network device; v is the Multiple-Input Multiple-Output (MIMO) layer indicator, and *maxMIMO-Layer* is determined by the maximum number of MIMO *layers* of carrier 1; $N_{RE}$ is the total available resources, $N_{RE}$ = 156 · $n_{PRB}$ and $n_{PRB}$ = $N_{PRB, LBRM}$, $N_{PRB,LBRM}$ is determined by the number of PRBs configured for carrier 1.

D13. obtaining a circular buffer length value corresponding to each carrier in the shared HPN carrier subset to which the transmission carrier for the target data scheduled by the first scheduling signaling belongs, and selecting, from the obtained circular buffer length values, a circular buffer length value that meets a first condition as the circular buffer length value for the target data, where the first condition includes one of the following: the value is the maximum value, and the value is the minimum value.

It should be noted that this situation can be understood as: it is necessary to calculate the circular buffer length value corresponding to each carrier in the shared HPN carrier subset to which the transmission carrier for the target data belongs one by one, and then select one maximum or minimum circular buffer length value from the multiple circular buffer length values as the circular buffer length value for the target data.

D14. obtaining the circular buffer length value for the target data according to the carrier parameters that meet a second condition and correspond to all carriers in the shared HPN carrier subset to which the transmission carrier for the target data scheduled by the first scheduling signaling belongs, wherein the second condition includes one of the following: the value is the maximum value, and the value is the minimum value.

It should be noted that this situation can be understood as: it is necessary to first obtain the carrier parameters corresponding to all carriers in the shared HPN carrier subset to which the transmission carrier for the target data belongs, and then select the maximum or minimum parameter value from these carrier parameters to calculate the circular buffer length value for the target data.

D15. obtaining the circular buffer length value for the target data according to a first indication in the first scheduling signaling, wherein the first indication is used for indicating a carrier bandwidth used by the circular buffer length value for the target data.

It should be noted that, for example, the carrier bandwidth can be represented by the number of physical resource blocks (PRBs) $n_{PRB, LBRM}$. That is, in the parameters used to calculate the circular buffer length value for the target data, the number of PRBs is indicated by the first scheduling signaling, and as for other parameters, the carrier parameters corresponding to the transmission carrier for the target data scheduled by the first scheduling signaling are used. For example, as shown in Table 1, a PRB number indicator (PRB_indicator) is added in the first scheduling signaling.

Table 1 The carrier bandwidth (number of PRBs $n_{PRB, LBRM}$ ) is indicated by the first scheduling signaling

| PRB_indicator | $n_{PRB, LBRM}$ Configuration | Description |
|---|---|---|
| 00 | 32 | 32 PRBs |
| 01 | 66 | 66 PRBs |
| 10 | 107 | 107 PRBs |
| 11 | 135 | 135 PRBs |

D16. obtaining a circular buffer length value for the target data according to a reference PRB number configured by the network device.

It should be noted that the reference PRB number is that when the network device configures the target carrier, in addition to configuring the first value of the carrier bandwidth PRB number, the network device also configures the second value of the PRB number used in calculating the circular buffer length value, that is, the reference PRB number. In this way, the network device or terminal uses the second value when calculating the circular buffer length value.

It should be noted that the above process of determining the circular buffer length value for the target data can be used for any data transmission, including but not limited to initial transmission and retransmission.

It should be noted that, by accurately obtaining the circular buffer length value for the target data when multiple carriers share the HPN, accurate data transmission can be ensured.

The following uses the communication between a terminal and a base station as an example to illustrate the specific applications of the embodiment of the present disclosure.

Application Scenario 1: Based on single carrier switching, the shared HPN mode is a semi-static mode

The specific implementation process includes steps 11, 12 and 13.

Step 11: The terminal receives first configuration information of a carrier set sent by a base station.

Assume that the base station configures one carrier set, and the first configuration information includes the following E11 and E12.

E11, information of carriers included in the carrier set (e.g., N carriers).

Assume N = 4, that is, one set contains 4 carriers; for example, carrier set set-1 = {carrier-1, carrier-2, carrier-3, carrier-4}.

E12, shared HPN mode is semi-static mode.

In this case, the base station configures carrier subsets sharing HPN as follows:

sub-set1 = {carrier-1, carrier-2}, that is, carrier-1 and carrier-2 share an HPN;
sub-set2 = {carrier-3, carrier-4}, that is, carrier-3 and carrier-4 share an HPN.

It should be noted that: in the above carrier set, the bands to which different carriers belong can be the same (i.e., belong to the same band) or different. For example:

carrier-1, carrier-2, carrier-3, and carrier-4 belong to different respective bands;
or,
carrier-1 and carrier-3 belong to band A, and carrier-2 and carrier-4 belong to band B.

It should be noted that: in the carrier subset sharing HPN, different carriers may share all HPN numbers (e.g., sharing of all HPN numbers is supported by default), or it may be indicated by signaling that only certain HPN numbers are shared.

Step 12: The terminal determines whether the data is a new transmission or a retransmission according to the scheduling signaling of the base station.

For data transmission in the HARQ process, it is necessary to determine whether the scheduled data is a new transmission or a retransmission so that the receiving end can merge the data. Similarly, for carriers being switched, if the HPN is shared, it is also necessary to determine whether the data is a new transmission or a retransmission. The determination method is as follows:

all carriers in the shared HPN carrier subset configured through high-layer signaling share an HPN. That is, the determination as to whether the NDI is flipped is based only on the same HPN, regardless of specific carriers, or different carriers can be regarded as one carrier.

The following takes the shared HPN carrier subset subset 1 = {carrier-1, carrier-2}, i.e., carrier-1 and carrier-2 share an HPN, as an example for explanation.

Assume that the current DCI-2 is for scheduling any cell (carrier-1 or carrier-2) in the sub-set 1, HPN = 3 and NDI value is curNDI; assume that DCI-1 is the scheduling signaling before DCI-2, and is for scheduling any cell (carrier-1 or carrier-2) in the sub-set 1, NDI value is preNDI and HPN = 3. The terminal determines whether the data is a new transmission or a retransmission based on whether curNDI flips relative to preNDI. Furthermore, if DCI-2 is the first received scheduling signaling for any cell (i.e., carrier) in sub-set 1, the data is directly determined to be a new transmission.

As shown in Fig. 6, carrier-1 and carrier-2 are configured by the base station as a shared HPN carrier subset sharing HPN, that is, the new transmission and retransmission of a data block can be transmitted on any one of carrier-1 and carrier-2. Then one of the following situations occurs:

for HPN=3, the terminal receives the scheduling signaling DCI-1 which is initial scheduling of carrier-1 in the shared HPN carrier subset, with NDI-1=0, then the terminal determines that the NDI is flipped (or directly determines that the data scheduled by DCI-1 is a new transmission);

for HPN=3, the terminal receives the scheduling signaling DCI-2 for scheduling carrier-2 in the shared HPN carrier subset, with NDI-2=0; by comparing to the NDI=0 in the most recent scheduling DCI-1 with HPN=3 (and belongs to the same shared HPN carrier subset as carrier-2), the terminal determines that the NDI is not flipped (or the data scheduled by DCI-2 is a retransmission);

for HPN=3, the terminal receives the scheduling signaling DCI-3 for scheduling carrier-2 in the shared HPN carrier subset, with NDI-3=1; by comparing to NDI=0 in the most recent scheduling DCI-2 with HPN=3 (and belongs to the same shared HPN carrier subset as carrier-2), the terminal determines that the NDI is flipped (the data scheduled by DCI-3 is a new transmission);

for HPN=3, the terminal receives the scheduling signaling DCI-4 for scheduling carrier-1 in the shared HPN carrier subset, with NDI-4=0; by comparing to NDI=1 in the most recent scheduling DCI-3 with HPN=3 (and belongs to the same shared HPN carrier subset as carrier-1), the terminal determines that the NDI is flipped (the data scheduled by DCI-4 is a new transmission).

From the terminal's perspective, considering that HARQ of carriers in a shared HPN carrier subset is shared, and the subset1 = {carrier-1, carrier-2}, it is suffice to support the HARQ buffering of one carrier, without the need to configure the buffering for two carriers. This can reduce the hardware cost of the terminal or base station.

Step 13: The terminal determines the circular buffer length value $N_{ref}$ in the channel coding parameter according to the scheduling signaling of the base station.

The terminal determines the circular buffer length value $N_{ref}$ of the channel coding parameter for the scheduled carrier according to the scheduling signaling of the base station and the carriers sharing HPN that are determined in step 12.

For example, $N_{ref}$ is calculated using the carrier parameter corresponding to the reference carrier in the shared HPN carrier subset.

The following description takes sub-set1 = {carrier-1, carrier-2}, i.e., carrier-1 and carrier-2 share an HPN, as an example.

Assuming that the reference carrier for calculating $N_{ref}$ is carrier-1, no matter whether data (PDSCH or PUSCH) is scheduled on carrier-1 or carrier-2, the carrier parameter of carrier-1 is used for calculating $N_{ref}$. For the calculation of $N_{ref}$ for carrier-1, please refer to the above formula 1 and description thereof will not be repeated here.

The reference carrier may be indicated by the base station or may be defined by a protocol (e.g., the carrier with the smallest carrier index is used as the reference carrier).

For example, the maximum value among the circular buffer length values calculated for all carriers in the shared HPN carrier subset is taken.

The following description takes sub-set1 = {carrier-1, carrier-2}, i.e., carrier-1 and carrier-2 share an HPN, as an example.

Assume that $N_{ref,c1}$ is calculated based on carrier-1, $N_{ref,c2}$ is calculated based on carrier-2, then $N_{ref}$ = max $(N_{ref,c1}, N_{ref,c2})$.

Of course, alternatively, the minimum value of the two carrier calculation results can be taken, which is not limited here.

Further, after determining the circular buffer length value, data reception (such as receiving a PDSCH) or data transmitting (such as sending a PUSCH) can be performed using the scheduling parameters obtained in steps 11 and 12.

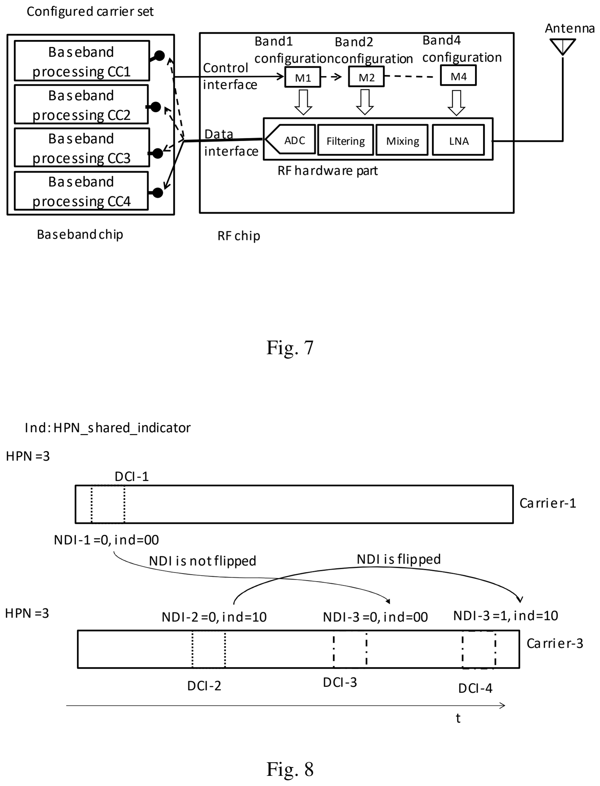

The effect of this application scenario is as shown in Fig. 7 (CC in Fig. 7 stands for carrier). In Fig. 7, CC1, CC2, CC3, and CC4 are configured as a carrier set.

CC1 is of the configuration of band 1.

CC2 is of the configuration of band 2.

CC3 is of the configuration of band 3.

CC4 is of the configuration of band 4.

Terminal implementation: considering that PDSCH reception on CC1, CC2, CC3, and CC4 are always based on time division, that is, no data from more than one carrier are scheduled at any given time, the terminal baseband capability is the PDSCH reception capability of one CC: max(CC1, CC2, CC3, CC4). This means the maximum capability among the four carriers is used as the terminal baseband capability. For radio frequency, these four different bands share one transmit channel, but can be configured with different parameters. To minimize impact on the protocol, "4 bands, 4 CCs" is still reported in the capability reporting. During scheduling by the base station, only one of the four carriers can be scheduled at a time.

Benefits that can be achieved in application scenario 1: without increasing the hardware complexity of the terminal or base station, more fragmented spectrums can be utilized, and flexible and fast switching can be performed between fragmented spectrums to meet service needs.

Application Scenario 2: based on group switching, DCI indicates the carrier relationship of shared HPN

The specific implementation process includes the following steps 21, 22 and 23.

Step 21. The terminal receives first configuration information of a carrier set sent by the base station.

Assume that the base station configures one carrier set, and the first configuration information includes the following E21, E22 and E23.

E21. information of carriers included in the carrier set (e.g., the number of carriers is N);

Assume N=4, that is, one set contains 4 carriers; carrier set set-1={carrier-1, carrier-2, carrier-3, carrier-4}.

E22. shared HPN mode is dynamic indication;

In this case, it is necessary to indicate, through DCI, with which carrier the scheduled carrier shares the HPN.

E23. carrier switching configuration based on carrier group;

In a carrier set, carrier groups that can perform simultaneous switching (uplink transmitting or downlink reception) are configured. Carriers in the same carrier group can be scheduled simultaneously by single scheduling signaling. Assuming the transmission mode is singleP mode, the carrier group configuration is as shown in Table 2.

Table 2 switching carrier groups configured by base station

| Switching carrier group | Indicator | Transmission Mode | Description |
|---|---|---|---|
| carrier-1, carrier-2 | 0 | singleP mode | Schedule CC-1 and CC-2 simultaneously and transmit one transport block on both carriers |
| carrier-3, carrier-4 | 1 | singleP mode | Schedule CC-1 and CC-2 simultaneously and transmit one transport block on both carriers |
| carrier-1, | 2 | Not relevant | Single carrier scheduling |
| carrier-2 | 3 | Not relevant | Single carrier scheduling |
| carrier-3 | 4 | Not relevant | Single carrier scheduling |
| carrier-4 | 5 | Not relevant | Single carrier scheduling |

As shown in Table 2, six carrier groups are defined, of which two carrier groups contain two carriers. When the scheduling signaling indicates such a group containing two carriers, it means that data can be transmitted simultaneously on the two carriers.

Step 22: The terminal determines whether the data is a new transmission or a retransmission according to the scheduling signaling of the base station.

For data transmission in the HARQ process, it is necessary to determine whether the scheduled data is a new transmission or a retransmission so that the receiving end can merge the data. Similarly, when switching between carriers, if the HPN is shared, it is also necessary to determine whether the data is a new transmission or a retransmission. The determination method is as follows:

the scheduling signaling, i.e., DCI, is used to indicate which carrier's HPN the HPN of this scheduling corresponds to, and whether NDI is flipped is determined.

The following uses a set of five carriers (set-1 = {carrier-1, carrier-2, carrier-3, carrier-4, carrier-5}) as an example to illustrate how DCI indicates shared HPN.

A. Add shared HPN indication information (HPN_shared_indicator) in the DCI scheduling signaling. The information field has a length of 2 bits. The specific format is as shown in Table 3.

Table 3 Shared HPN indication information

| Switching carrier combination subset | Information field length | Description |
|---|---|---|
| HPN_shared_indicator | 2 bits | 00: Shared with the first carrier.<br>01: Shared with the second carrier.<br>10: Shared with the third carrier.<br>11: Shared with the fourth carrier. |

It should be noted that, if the sharing carrier indicated by the HPN_shared_indicator is 00, it means sharing HPN with the first carrier. The first carrier here may refer to carrier-1 or other carrier-1, which depends on the terminal's implementation. Additionally, the HPN_shared_indicator can indicate up to four sharing carriers. From the terminal's perspective, it is sufficient to support HARQ buffering for only four carriers; there is no need to configure HARQ buffering for five carriers.

B. The terminal determines the HPN sharing relationship of this scheduling based on the HPN and HPN_shared_indicator in the scheduling DCI, and determines whether this transmission is a new transmission or a retransmission.

An illustrative process is as follows.

As shown in Fig. 8, the terminal receives four scheduling signalings, which indicate data transmissions on carrier 1 and carrier 3. Then one of the following situations occurs:

for HPN=3, the terminal receives the scheduling signaling DCI-1 for the initial scheduling of carrier-1, with NDI-1=0, and ind=00 (that is, HPN_shared_indicator indicates 00), the terminal directly determines that the NDI is flipped (or directly determines that the data scheduled by DCI-1 is a new transmission);

for HPN=3, the terminal receives the scheduling signaling DCI-2 for the initial scheduling of carrier-3, with NDI-2=0, and ind=10 (that is, HPN_shared_indicator indicates 10), the terminal directly determines that the NDI is flipped (or directly determines that the scheduling data of DCI-2 is a new transmission);

for HPN=3, the terminal receives the scheduling signaling DCI-3 for carrier-3, with NDI-3=0 and ind=00; by comparing to the NDI=0 in the most recent scheduling DCI-1 with HPN=3 (and ind=00), the terminal determines that the NDI is not flipped (or the data scheduled by DCI-3 is a retransmission);

for HPN=3, the terminal receives the scheduling signaling DCI-4 for scheduling carrier-3, with NDI-4=1 and ind=10; by comparing to the NDI=0 in the most recent scheduling DCI-2 with HPN=3 (and ind=10), the terminal determines that the NDI is flipped (the data scheduled by DCI-4 is a new transmission).

Step 23: The terminal determines the circular buffer length value $N_{ref}$ in the channel coding parameter according to the scheduling signaling of the base station.

The terminal determines the circular buffer length value $N_{ref}$ of the channel coding parameter of the scheduled carrier based on the scheduling signaling of the base station and the carriers sharing the HPN determined in step 22, and performs data reception and decoding.

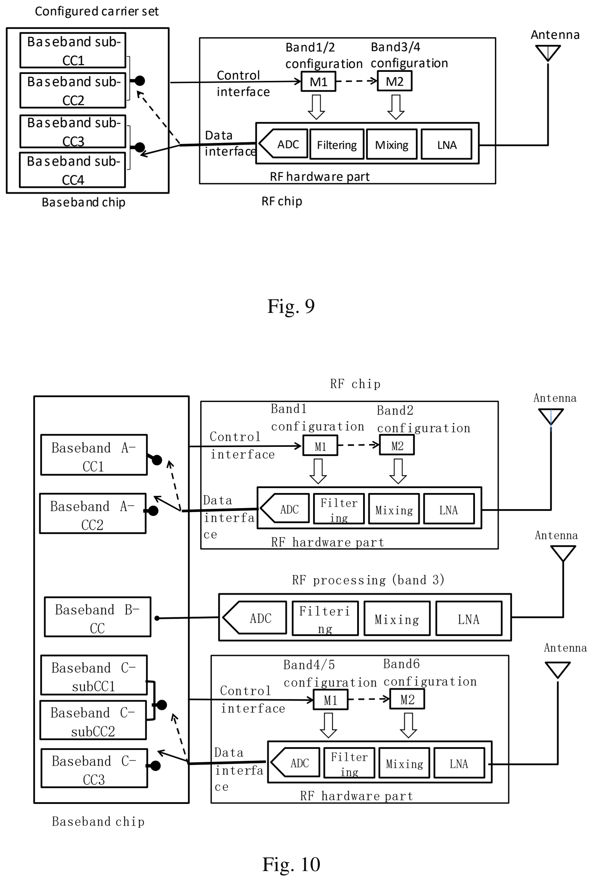

The effect of this application scenario is as shown in Fig. 9 (CC in Fig. 9 stands for carrier). In Fig. 9, sub-CC1 and sub-CC2 are configured as a carrier group.

Sub-CC1 is of the configuration of band 1.

Sub-CC2 is of the configuration of band 2.

Note: For broadband RF devices, one filter/low noise amplifier (LNA) can support the reception on band 1 and band 2 simultaneously.

In Fig. 9, sub-CC3 and sub-CC4 are configured as a carrier group;

Sub-CC3 is of the configuration of band 3.

Sub-CC4 is of the configuration of band 4.

Note: For broadband RF devices, one filter /LNA can support the reception on band 3 and band 4 simultaneously.

Terminal implementation: carrier group 1 occupies the PDSCH reception capability of one CC (due to being configured in singleP mode). Carrier group 2 (due to being configured in singleP mode) occupies the baseband capability of one CC. Because PDSCH reception is performed based on time division between the two groups, the baseband processing of one CC is occupied in total. To minimize impact on the protocol, "4 bands, 4 CCs" is still reported in the terminal capability reporting, but base station scheduling is limited.

It should be noted that the baseband processing capability of one CC is: max (CC1+CC2, CC3+CC4). Here, CC1+CC2 represents the sum of the capabilities of the two carriers. For example, if the number of PRBs in CC1 is 100 and the number of PRBs in CC2 is 120, CC1+CC2 represents the baseband processing capability of processing 220 PRBs of data.

It should be noted that the shared HPN carrier subset may be an uplink carrier for transmitting a PUSCH or a downlink carrier for transmitting a PDSCH.

Benefits of this application scenario are: without increasing the hardware complexity of the terminal or base station, it can utilize more fragmented spectrums and perform flexible and fast switching between fragmented spectrums. At the same time, considering that fragmented spectrum has a small bandwidth, the group-based switching method can further reduce the requirements on terminal capabilities.

Application Scenario 3:

The above application scenarios 1 and 2 assume that the base station configures one carrier set. In this application scenario, multiple carrier sets are configured. The process of configuring each carrier set is the same as the above application scenario and will not be repeated here.

As shown in Fig. 10 (CC in Fig. 10 stands for carrier), A-CC1 and A-CC2 belong to one carrier set 1 and reception (RX) switching is performed between them. A-CC1 is configured as band 1, and A-CC2 is configured as band 2. (C-subCC1+C-subCC2)/C-CC3 belong to one carrier set 2 and RX switching is performed between them.

C-subCC1+C-subCC2 form one carrier group (corresponding to band 4/5) and use a baseband processing unit of one carrier.

C-CC3 is configured as a band.

For B-CC, RX switching is not performed.

Terminal implementation:

Considering that the scheduled data for A-CC1 and A-CC2 are based on time division (i.e., not transmitted simultaneously), the baseband processing unit of one carrier is actually used.

Considering that RX switching is not performed for B-CC1, the baseband processing unit of one carrier is used.

For C-subCC1, C-subCC2, and C-CC3, the baseband processing unit of one carrier is actually used.

That is, the baseband of the above carrier set occupies the PDSCH processing capability of 3 CCs. To reduce the impact on the protocol, the terminal still reports the capability as (6 bands, 6CCs). When the base station schedules, it schedules according to the RX switching configuration.

In summary, the embodiments of the present disclosure can utilize more fragmented spectrums without increasing the hardware complexity of the terminal or base station, and perform flexible and rapid switching between the fragmented spectrums to meet service needs.

The technical solutions provided by the embodiments of the present disclosure can be applied to a variety of systems, particularly 5G systems. For example, applicable systems may include the Global System of Mobile Communication (GSM) system, the Code Division Multiple Access (CDMA) system, the Wideband Code Division Multiple Access (WCDMA), General Packet Radio Service (GPRS) system, the Long Term Evolution (LTE) system, the LTE Frequency Division Duplex (FDD) system, the LTE Time Division Duplex (TDD) system, the Long Term Evolution Advanced (LTE-A) system, the Universal Mobile Telecommunications System (UMTS), the Worldwide Interoperability for Microwave Access (WiMAX) system, and the 5G New Radio (NR) system. These various systems include a terminal device and a network device. The systems may also include core network components, such as the Evolved Packet System (EPS) and the 5G System (5GS).

The terminal involved in the embodiments of the present disclosure, also referred to as terminal device, can be device that provides voice and/or data connectivity to users, handheld device with wireless connectivity, or other processing device connected to a wireless modem. The names of terminal devices may vary in different systems. For example, in 5G systems, terminal devices may be referred to as user equipment (UE). Wireless terminal devices can communicate with one or more core networks (CNs) via a radio access network (RAN). Wireless terminal devices can be mobile terminal devices, such as mobile phones (also known as "cellular" phones) and computers with mobile terminal devices. For example, they can be portable, pocket-sized, handheld, computer built-in, or in-vehicle mobile devices that exchange voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device involved in the embodiments of the present disclosure may be a base station, which may include multiple cells providing services to terminals. Depending on the specific application scenario, a base station may also be referred to as an access point, or may be a device in an access network that communicates with a wireless terminal device via one or more sectors over the air interface, or may be referred to by other names. The network device may be used to interchange received air frames with Internet Protocol (IP) packets, acting as a router between the wireless terminal device and the rest of the access network, which may include an Internet Protocol (IP) communication network. The network device may also coordinate attribute management of the air interface. For example, the network devices involved in the embodiments of the present disclosure may be base transceiver stations (BTSs) in the Global System for Mobile communications (GSM) or Code Division Multiple Access (CDMA), NodeBs in Wide-band Code Division Multiple Access (WCDMA), evolved NodeBs (eNBs or e-NodeBs) in the Long Term Evolution (LTE) system, 5G base stations (gNBs) in the next generation 5G network architecture, home evolved NodeBs (HeNBs), relay nodes, femtos, picos, etc., and are not limited in the embodiments of the present disclosure. In some network structures, the network devices may include centralized unit (CU) nodes and distributed unit (DU) nodes, and the centralized unit and the distributed unit may also be geographically separated.

Network devices and terminal devices can each use one or more antennas for Multiple Input Multiple Output (MIMO) transmission. MIMO transmission can be either Single User MIMO (SU-MIMO) or Multiple User MIMO (MU-MIMO). Depending on the configuration and number of antenna combinations, MIMO transmission can be two-dimensional MIMO (2D-MIMO), three-dimensional MIMO (3D-MIMO), full-dimensional MIMO (FD-MIMO), or massive MIMO. It can also employ diversity transmission, precoding, beamforming or the like.

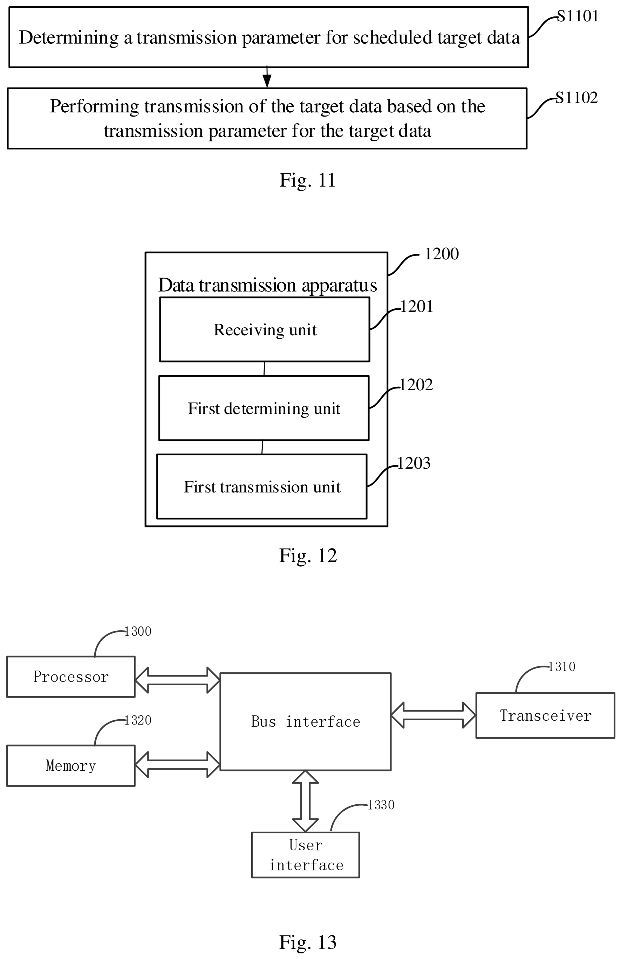

Corresponding to the implementation of the terminal, as shown in Fig. 11, an embodiment of the present disclosure provides a data transmission method performed by a network device, including:

step S1101, determining a transmission parameter for scheduled target data;
step S1102: performing transmission of the target data based on the transmission parameter for the target data;
wherein the transmission parameter includes at least one of the following:

a transmission carrier for the target data;
a circular buffer length value for the target data; or
a new transmission or retransmission identifier for the target data.

In some embodiments, the network device may send downlink data (e.g., PDSCH) or receive uplink data (e.g., PUSCH).

In some embodiments, determining the transmission parameter for scheduled target data includes:

determining, based on the first scheduling signaling and first configuration information of at least one carrier set, the transmission parameter for the scheduled target data;
wherein the first configuration information includes at least one of the following:

information of carriers included in the carrier set;
shared hybrid automatic repeat request process number (HPN) carrier subset;
HPN sharing mode; or
indication information of scheduled carriers in the carrier set.

It should be noted that the first scheduling signaling is used for scheduling target data.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously;
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, determining the new transmission or retransmission identifier for the target data includes at least one of the following:

determining the new transmission or retransmission identifier for the target data according to at least one of a first transmission carrier, a first HPN, or a first NDI indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, determining the new transmission or retransmission identifier for the target data according to at least one of the first transmission carrier, the first HPN, or the first NDI indicated by the first scheduling signaling includes at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

in a case that the first NDI and the second NDI are inconsistent, determining that the target data is a new transmission; or
in a case that the first NDI is consistent with the second NDI, determining that the target data is a retransmission.

In some embodiments, determining the circular buffer length value for the target data includes at least one of the following:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;
obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;
obtaining, according to a first indication in the first scheduling signaling, the circular buffer length value for the target data, wherein the first indication is used for indicating a carrier bandwidth used by the circular buffer length value for the target data; or
obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

It should be noted that, for the specific implementation of the network device, reference can be made to the description of the above embodiment, and repeated description will be omitted here.

As shown in Fig. 12, an embodiment of the present disclosure provides a data transmission apparatus 1200, which is applied to a terminal and includes:

a receiving unit 1201, configured to receive a first scheduling signaling sent by a network device;
a first determining unit 1202, configured to determine, based on the first scheduling signaling, a transmission parameter for scheduled target data;
a first transmission unit 1203, configured to perform transmission of the target data based on the transmission parameter for the target data;
wherein the transmission parameter includes at least one of the following:

a transmission carrier for the target data;
a circular buffer length value for the target data; or
a new transmission or retransmission identifier for the target data.

In some embodiments, the first determining unit 1202 is configured to:

determine, based on the first scheduling signaling and first configuration information of at least one carrier set sent by the network device, the transmission parameter for the scheduled target data;
wherein the first configuration information includes at least one of the following:

information of carriers included in the carrier set;

shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, the first determining unit 1202 is configured to implement at least one of the following:

determining the new transmission or retransmission identifier for the target data according to at least one of a first transmission carrier, a first HPN, or a first NDI indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the determining the new transmission or retransmission identifier for the target data according to at least one of the first transmission carrier, the first HPN, or the first NDI indicated by the first scheduling signaling includes at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, the determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

in a case that the first NDI and the second NDI are inconsistent, determining that the target data is a new transmission; or
in a case that the first NDI is consistent with the second NDI, determining that the target data is a retransmission.

In some embodiments, the first determining unit 1202 is configured to implement at least one of the following:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

It should be noted that the apparatus embodiment is an apparatus that corresponds one-to-one to the above-mentioned method embodiment. All implementation methods in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on this understanding, the technical solution of the present disclosure, or the part that contributes to the relevant technology, or all or part of the technical solution can be embodied in the form of a software product. The computer software product is stored in a storage medium and includes several instructions for enabling a computer device (which can be a personal computer, server, or network device, etc.) or a processor to implement all or part of the steps of the method described in each embodiment of the present disclosure. The aforementioned storage medium includes: USB drive, mobile hard disk, read-only memory (ROM), random access memory (RAM), magnetic disk or optical disc, and other media that can store program code.

As shown in Fig. 13, an embodiment of the present disclosure further provides a terminal, including a processor 1300, a transceiver 1310, a memory 1320, and a program stored in the memory 1320 and executable on the processor 1300. The transceiver 1310 is connected to the processor 1300 and the memory 1320 via a bus interface. The processor 1300 is configured to read the program in the memory and execute the following steps:

receiving, through the transceiver, a first scheduling signaling sent by a network device;

determining, based on the first scheduling signaling, a transmission parameter for scheduled target data; and

performing transmission of the target data based on the transmission parameter for the target data;

wherein the transmission parameter includes at least one of the following:

a transmission carrier for the target data;

a circular buffer length value for the target data; or

a new transmission or retransmission identifier for the target data.

The transceiver 1310 is configured to receive and send data under the control of the processor 1300.

In Fig. 13, the bus architecture may include any number of interconnected buses and bridges, specifically linking together various circuits of one or more processors represented by processor 1300 and memory represented by memory 1320. The bus architecture may also link together various other circuits such as peripheral devices, voltage regulators, and power management circuits, which are well known in the art and are therefore not further described herein. The bus interface provides an interface. The transceiver 1310 may be a plurality of components, namely, a transmitter and a receiver, providing a unit for communicating with various other devices over a transmission medium, such as a wireless channel, a wired channel, an optical cable, and the like. For different user equipments, the user interface 1330 may also be an interface capable of connecting external or internal devices as required, and the connected devices include but are not limited to a keypad, a display, a speaker, a microphone, a joystick, and the like.

The processor 1300 is responsible for managing the bus architecture and general processing, and the memory 1320 can store data used by the processor 1300 when performing operations.

In some embodiments, the processor 1300 may be a central processing unit (CPU), an application specific integrated circuit (ASIC), a field programmable gate array (FPGA), or a complex programmable logic device (CPLD). The processor may also adopt a multi-core architecture.

By calling the computer program stored in the memory, the processor implements any of the methods provided by the embodiments of the present disclosure according to the obtained executable instructions. The processor and the memory can also be arranged physically separately.

In some embodiments, the processor is configured to read the computer program in the memory to further perform the following step:

determining, based on the first scheduling signaling and first configuration information of at least one carrier set sent by the network device, the transmission parameter for the scheduled target data;

wherein the first configuration information includes at least one of the following:

information of carriers included in the carrier set;
shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, the processor is configured to read the computer program in the memory and perform the following steps:

determining the new transmission or retransmission identifier for the target data according to at least one of a first transmission carrier, a first HPN, or a first NDI indicated by the first scheduling signaling;
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the processor is configured to read the computer program in the memory and perform at least one of the following steps:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, the processor is configured to read the computer program in the memory and perform at least one of the following steps:

in a case that the first NDI and the second NDI are inconsistent, determining that the target data is a new transmission; or

in a case that the first NDI is consistent with the second NDI, determining that the target data is a retransmission.

In some embodiments, the processor is configured to read the computer program in the memory and perform at least one of the following steps:

obtaining the circular buffer length value for the target data through a carrier parameter corresponding to the transmission carrier for the target data scheduled by the first scheduling signaling;

obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

At least one embodiment of the present disclosure also provides a terminal, including a memory, a processor, and a computer program stored on the memory and executable on the processor. When the processor executes the program, the various processes in the embodiments of the data transmission method performed by the terminal are implemented, and the same technical effect can be achieved. To avoid repetition, they will not be described here.

At least one embodiment of the present disclosure further provides a computer-readable storage medium having a computer program stored thereon. When executed by a processor, the computer program implements the various processes of the aforementioned embodiments of the data transmission method performed by a terminal, and achieves the same technical effects. To avoid repetition, the details are not further described here. The computer-readable storage medium may be, for example, a read-only memory (ROM), a random access memory (RAM), a magnetic disk, or an optical disc.

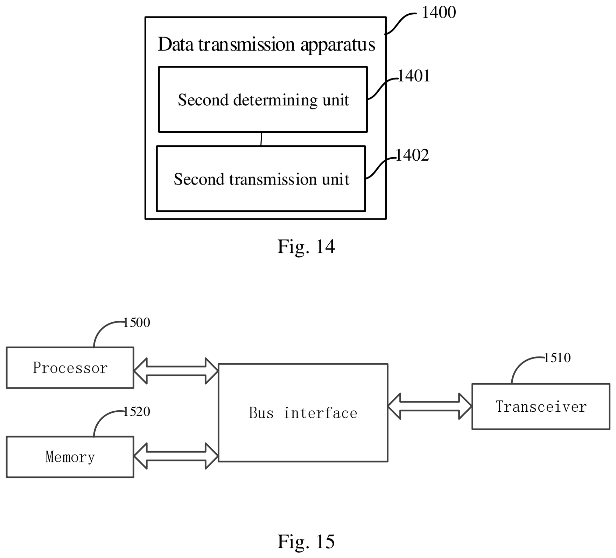

As shown in Fig. 14, an embodiment of the present disclosure provides a data transmission apparatus 1400, which is applied to a network device and includes:

a second determining unit 1401, configured to determine a transmission parameter for scheduled target data;

a second transmission unit 1402, configured to perform transmission of the target data based on the transmission parameter for the target data;

wherein the transmission parameter includes at least one of the following:

a transmission carrier for the target data;

a circular buffer length value for the target data; or

a new transmission or retransmission identifier for the target data.

In some embodiments, the second determining unit 1401 is configured to:

determining, based on the first scheduling signaling and first configuration information of at least one carrier set, the transmission parameter for the scheduled target data;

wherein the first configuration information includes at least one of the following:

    information of carriers included in the carrier set;
    shared hybrid automatic repeat request process number (HPN) carrier subset;
    HPN sharing mode; or
    indication information of scheduled carriers in the carrier set.

In some embodiments, the HPN sharing mode includes at least one of the following:

    semi-static mode; or
    dynamic mode.

In some embodiments, the indication information of scheduled carriers includes at least one of the following:

    a subset of carriers in the carrier set that can be received simultaneously or sent simultaneously; or
    indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, the second determining unit 1401 is configured to implement at least one of the following:

    determining the new transmission or retransmission identifier for the target data according to at least one of a first transmission carrier, a first HPN, or a first NDI indicated by the first scheduling signaling; or
    determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
    wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the determining the new transmission or retransmission identifier for the target data according to at least one of the first transmission carrier, the first HPN, or the first NDI indicated by the first scheduling signaling includes at least one of the following:

    in a case that the scheduling of the first transmission carrier by the first scheduling signaling is an initial scheduling of the shared HPN carrier subset, determining that the target data is a new transmission;
    in a case that the scheduling of the first transmission carrier by the first scheduling signaling is not the initial scheduling of the shared HPN carrier subset, and the value of the first NDI is flipped, determining that the target data is a new transmission; or
    in a case that the scheduling of the first transmission carrier by the first scheduling signaling is not the initial scheduling of the shared HPN carrier subset, and the value of the first NDI is not flipped, determining that the target data is a retransmission.

In some embodiments, the determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling includes at least one of the following:

    in a case that the first NDI and the second NDI are inconsistent, determining that the target data is a new transmission; or
    in a case that the first NDI is consistent with the second NDI, determining that the target data is a retransmission.

In some embodiments, the second determining unit 1401 is configured to implement at least one of the following:

obtaining the circular buffer length value for the target data through a carrier parameter corresponding to the transmission carrier for the target data scheduled by the first scheduling signaling;

obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition corresponding to all carriers in the shared HPN carrier subset to which a transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

It should be noted that the apparatus embodiment is an apparatus that corresponds one-to-one to the above-mentioned method embodiment. All implementation methods in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on this understanding, the technical solution of the present disclosure, or the part that contributes to the relevant technology, or all or part of the technical solution can be embodied in the form of a software product. The computer software product is stored in a storage medium and includes several instructions for enabling a computer device (which can be a personal computer, server, or network device, etc.) or a processor to implement all or part of the steps of the method described in each embodiment of the present disclosure. The aforementioned storage medium includes: USB drive, mobile hard disk, read-only memory (ROM), random access memory (RAM), magnetic disk or optical disc, and other media that can store program code.

As shown in Fig. 15, an embodiment of the present disclosure further provides a network device, including a processor 1500, a transceiver 1510, a memory 1520, and a program stored in the memory 1520 and executable on the processor 1500. The transceiver 1510 is connected to the processor 1500 and the memory 1520 via a bus interface. The processor 1500 is configured to read the program in the memory and execute the following steps:

determining a transmission parameter for scheduled target data;
performing transmission of the target data based on the transmission parameter for the target data;
wherein the transmission parameter includes at least one of the following:

a transmission carrier for the target data;
a circular buffer length value for the target data; or
a new transmission or retransmission identifier for the target data.

The transceiver 1510 is configured to receive and send data under the control of the processor 1500.

In Fig. 15, the bus architecture may include any number of interconnected buses and bridges, specifically linking together various circuits of one or more processors represented by processor 1500 and memory represented by memory 1520. The bus architecture may also link together various other circuits such as peripheral devices, voltage regulators, and power management circuits, all of which are well known in the art and, therefore, will not be further described herein. The bus interface provides an interface. The transceiver 1510 may be a plurality of components, namely, a transmitter and a receiver, providing a unit for communicating with various other devices over a transmission medium, such as a wireless channel, a wired channel, an optical cable, or the like.

The processor 1500 is responsible for managing the bus architecture and general processing, and the memory 1520 can store data used by the processor 1500 when performing operations.

In some embodiments, the processor 1500 may be a CPU, an ASIC, an FPGA, or a CPLD, and the processor may also adopt a multi-core architecture.

By calling the computer program stored in the memory, the processor implements any of the methods provided by the embodiments of the present disclosure according to the obtained executable instructions. The processor and the memory can also be arranged physically separately.

In some embodiments, the processor is configured to read the computer program in the memory to further perform the following step:

determining, based on the first scheduling signaling and first configuration information of at least one carrier set, the transmission parameter for the scheduled target data;
wherein the first configuration information includes at least one of the following:

information of carriers included in the carrier set;
shared hybrid automatic repeat request process number (HPN) carrier subset;
HPN sharing mode; or
indication information of scheduled carriers in the carrier set.

In some embodiments, the HPN sharing mode includes at least one of the following:

semi-static mode; or
dynamic mode.

In some embodiments, the indication information of scheduled carriers includes at least one of the following:

a subset of carriers in the carrier set that can be received simultaneously or sent simultaneously; or
indication information of a transmission mode for the target data, wherein the transmission mode includes at least one of: single-processor mode or multi-processor mode.

In some embodiments, the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

In some embodiments, the processor is configured to read the computer program in the memory and perform at least one of the following steps:

determining the new transmission or retransmission identifier for the target data according to at least one of a first transmission carrier, a first HPN, or a first NDI indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

In some embodiments, the processor is configured to read the computer program in the memory and perform at least one of the following steps:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

In some embodiments, the processor is configured to read the computer program in the memory and perform at least one of the following steps:

in a case that the first NDI and the second NDI are inconsistent, determining that the target data is a new transmission; or

in a case that the first NDI is consistent with the second NDI, determining that the target data is a retransmission.

In some embodiments, the processor is configured to read the computer program in the memory and perform at least one of the following steps:

obtaining the circular buffer length value for the target data through a carrier parameter corresponding to the transmission carrier for the target data scheduled by the first scheduling signaling;

obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition includes one of the following: the value is the maximum value, and the value is the minimum value;

obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition includes one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

In some embodiments, the first scheduling signaling includes: shared HPN indication information, where the shared HPN indication information is used for indicating target carrier information that shares the HPN with the transmission carrier for the target data scheduled by the first scheduling signaling.

It should be noted here that the above-mentioned network device provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure also provides a computer-readable storage medium having a computer program stored thereon, wherein when the computer program is executed by a processor, the computer program implements the steps of the data transmission method performed by a network device. The processor-readable storage medium can be any available medium or data storage device that can be accessed by the processor, including but not limited to magnetic storage (such as a floppy disk, a hard disk, a magnetic tape, a magneto-optical disk (MO), etc.), optical storage (such as a compact disc (CD), a digital versatile disc (DVD), a Blu-ray disc (BD), a high-definition versatile disc (HVD), etc.), and semiconductor storage (such as ROM, erasable programmable read-only memory (EPROM), electrically erasable programmable read-only memory (EEPROM), non-volatile memory (NAND FLASH), solid-state disk (SSD), etc.).

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, the determination module can be a separately established processing element, or it can be integrated into a chip of the above-mentioned device. In addition, it can also be stored in the memory of the above-mentioned device in the form of program code, and called by a processing element of the above-mentioned device to perform the functions of the above-mentioned determination module. The implementation of other modules is similar. In addition, these modules can all or partly be integrated together, or they can be implemented independently. The processing element described here can be an integrated circuit with signal processing capabilities. In the implementation process, each step of the above method or each of the above modules can be completed by the hardware integrated logic circuit in the processor element or by instructions in the form of software.

For example, each module, unit, sub-unit, or sub-module may be one or more integrated circuits configured to implement the above method, such as one or more application-specific integrated circuits (ASICs), one or more digital signal processors (DSPs), or one or more field programmable gate arrays (FPGAs). For another example, when a module is implemented by scheduling program code on a processing element, the processing element may be a general-purpose processor, such as a central processing unit (CPU) or other processor capable of calling program code. For another example, these modules may be integrated together and implemented in the form of a system-on-a-chip (SOC).

The terms "first", "second", and the like in the specification and claims of the present disclosure are used to distinguish similar objects and are not necessarily used to describe a specific order or precedence. It should be understood that the terms used in this manner are interchangeable where appropriate, so that the embodiments of the present disclosure described herein may be implemented in a sequence other than that illustrated or described herein. In addition, the terms "including" and "having" and any variations thereof, are intended to cover non-exclusive inclusions. For example, a process, method, system, product, or device that includes a series of steps or units need not be limited to those steps or units explicitly listed, but may include other steps or units that are not explicitly listed or that are inherent to these processes, methods, products, or devices. In addition, the use of "and/or" in the specification and claims to indicate at least one of the connected objects, for example, A and/or B and/or C, means that seven situations are included: A alone, B alone, C alone, both A and B present, both B and C present, both A and C present, and all A, B, and C present. Similarly, the use of "at least one of A and B" in the specification and claims should be understood to mean "A alone, B alone, or both A and B present."

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. A data transmission method, performed by a terminal, comprising:

   receiving a first scheduling signaling sent by a network device;
   determining, based on the first scheduling signaling, a transmission parameter for scheduled target data; and
   performing transmission of the target data based on the transmission parameter for the target data;
   wherein the transmission parameter comprises at least one of the following:

a transmission carrier for the target data;
a circular buffer length value for the target data; or
a new transmission or retransmission identifier for the target data.

2. The method according to claim 1, wherein the determining, based on the first scheduling signaling, the transmission parameter for the scheduled target data comprises:

determining, based on the first scheduling signaling and first configuration information of at least one carrier set sent by the network device, the transmission parameter for the scheduled target data;
wherein the first configuration information comprises at least one of the following:

information of carriers comprised in the carrier set;
shared hybrid automatic repeat request process number (HPN) carrier subset;
HPN sharing mode; or
indication information of scheduled carriers in the carrier set.

3. The method according to claim 2, wherein the HPN sharing mode comprises at least one of the following:

semi-static mode; or
dynamic mode.

4. The method according to claim 2, wherein the indication information of scheduled carriers comprises at least one of the following:

a subset of carriers in the carrier set that can be received simultaneously or sent simultaneously; or
indication information of a transmission mode for the target data, wherein the transmission mode comprises at least one of: single-processor mode or multi-processor mode.

5. The method according to claim 4, wherein the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

6. The method according to any one of claims 1 to 5, wherein the determining the new transmission or retransmission identifier for the target data comprises at least one of the following:

determining the new transmission or retransmission identifier for the target data according to at least one of a first transmission carrier, a first HPN, or a first new data indicator (NDI) indicated by the first scheduling signaling; or
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling;
wherein the transmission time of the second scheduling signaling is earlier than the transmission time of the first scheduling signaling; the first transmission carrier and the second transmission carrier belong to the same shared HPN carrier subset; and the first HPN is equal to the second HPN.

7. The method according to claim 6, wherein the determining the new transmission or retransmission identifier for the target data according to at least one of the first transmission carrier, the first HPN, or the first NDI indicated by the first scheduling signaling comprises at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and a value of the first NDI is flipped, determining that the target data is a new transmission;
in a case that the scheduling of the first transmission carrier by the first scheduling signaling is not the initial scheduling of the shared HPN carrier subset, and the value of the first NDI is not flipped, determining that the target data is a retransmission.

8. The method according to claim 6, wherein the determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling comprises at least one of the following:

in a case that the first NDI and the second NDI are inconsistent, determining that the target data is a new transmission; or
in a case that the first NDI is consistent with the second NDI, determining that the target data is a retransmission.

9. The method according to any one of claims 1 to 8, wherein the determining the circular buffer length value for the target data comprises at least one of the following:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition comprises one of the following: the value is the maximum value, and the value is the minimum value;
obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition comprises one of the following: the value is the maximum value, and the value is the minimum value;
obtaining, according to a first indication in the first scheduling signaling, the circular buffer length value for the target data, wherein the first indication is used for indicating a carrier bandwidth used by the circular buffer length value for the target data; or
obtaining, according to a reference physical resource block (PRB) number configured by the network device, the circular buffer length value for the target data.

10. The method according to any one of claims 1 to 9, wherein the first scheduling signaling comprises: shared HPN indication information, wherein the shared HPN indication information is used for indicating target carrier information sharing the HPN with the transmission carrier for the target data scheduled by the first scheduling signaling.

11. A data transmission method, performed by a network device, comprising:

determining a transmission parameter for scheduled target data;
performing transmission of the target data based on the transmission parameter for the target data;
wherein the transmission parameter comprises at least one of the following:

a transmission carrier for the target data;
a circular buffer length value for the target data; or
a new transmission or retransmission identifier for the target data.

12. The method according to claim 11, wherein the determining the transmission parameter for the scheduled target data comprises:

determining, based on the first scheduling signaling and first configuration information of at least one carrier set, the transmission parameter for the scheduled target data;
wherein the first configuration information comprises at least one of the following:

information of carriers comprised in the carrier set;
shared hybrid automatic repeat request process number (HPN) carrier subset;
HPN sharing mode; or
indication information of scheduled carriers in the carrier set.

13. The method according to claim 12, wherein the HPN sharing mode comprises at least one of the following:

semi-static mode; or
dynamic mode.

14. The method according to claim 12, wherein the indication information of scheduled carriers comprises at least one of the following:

a subset of carriers in the carrier set that can be received simultaneously or sent simultaneously;
indication information of a transmission mode for the target data, wherein the transmission mode comprises at least one of: single-processor mode or multi-processor mode.

15. The method according to any one of claims 11 to 14, wherein the determining the new transmission or retransmission identifier for the target data comprises at least one of the following:

determining the new transmission or retransmission identifier for the target data according to at least one of a first transmission carrier, a first HPN, or a first NDI indicated by the first scheduling signaling;
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling; wherein the transmission time of the second scheduling signaling is earlier than the transmission time of the first scheduling signaling; the first transmission carrier and the second transmission carrier belong to the same shared HPN carrier subset; and the first HPN is equal to the second HPN.

16. The method according to claim 15, wherein the determining the new transmission or retransmission identifier for the target data according to at least one of the first transmission carrier, the first HPN, or the first NDI indicated by the first scheduling signaling comprises at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

17. The method according to claim 15, wherein the determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling comprises at least one of the following:

in a case that the first NDI and the second NDI are inconsistent, determining that the target data is a new transmission; or
in a case that the first NDI is consistent with the second NDI, determining that the target data is a retransmission.

18. The method according to any one of claims 11 to 17, wherein the first scheduling signaling comprises: shared HPN indication information, wherein the shared HPN indication information is used for indicating target carrier information sharing the HPN with the transmission carrier for the target data scheduled by the first scheduling signaling.

19. A terminal comprising a memory, a transceiver, and a processor, wherein the memory is configured to store a computer program; the transceiver is configured to transmit and receive data under the control of the processor; and the processor is configured to read the computer program in the memory and perform the following steps:

receiving, through the transceiver, a first scheduling signaling sent by a network device;
determining, based on the first scheduling signaling, a transmission parameter for scheduled target data; and
performing transmission of the target data based on the transmission parameter for the target data;
wherein the transmission parameter comprises at least one of the following:

a transmission carrier for the target data;
a circular buffer length value for the target data; or
a new transmission or retransmission identifier for the target data.

20. The terminal according to claim 19, wherein the processor is configured to read the computer program in the memory and further perform the following step:

determining, based on the first scheduling signaling and first configuration information of at least one carrier set sent by the network device, the transmission parameter for the scheduled target data;
wherein the first configuration information comprises at least one of the following:

information of carriers comprised in the carrier set;
shared hybrid automatic repeat request process number (HPN) carrier subset;
HPN sharing mode; or
indication information of scheduled carriers in the carrier set.

21. The terminal according to claim 20, wherein the HPN sharing mode comprises at least one of the following:

semi-static mode; or
dynamic mode.

22. The terminal according to claim 20, wherein the indication information of scheduled carriers comprises at least one of the following:

a subset of carriers in the carrier set that can be received simultaneously or sent simultaneously; or
indication information of a transmission mode for the target data, wherein the transmission mode comprises at least one of: single-processor mode or multi-processor mode.

23. The terminal according to claim 22, wherein the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

24. The terminal according to any one of claims 19 to 23, wherein the processor is configured to read the computer program in the memory and perform the following steps:

determining the new transmission or retransmission identifier for the target data according to at least one of a first transmission carrier, a first HPN, or a first NDI indicated by the first scheduling signaling;
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling; wherein the transmission time of the second scheduling signaling is earlier than the transmission time of the first scheduling signaling; the first transmission carrier and the second transmission carrier belong to the same shared HPN carrier subset; and the first HPN is equal to the second HPN.

25. The terminal according to claim 24, wherein the processor is configured to read the computer program in the memory and perform at least one of the following steps:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

26. The terminal according to claim 24, wherein the processor is configured to read the computer program in the memory and perform at least one of the following steps:

in a case that the first NDI and the second NDI are inconsistent, determining that the target data is a new transmission; or
in a case that the first NDI is consistent with the second NDI, determining that the target data is a retransmission.

27. The terminal according to any one of claims 19 to 26, wherein the processor is configured to read the computer program in the memory and perform at least one of the following steps:

obtaining the circular buffer length value for the target data through a carrier parameter corresponding to the transmission carrier for the target data scheduled by the first scheduling signaling;
obtaining the circular buffer length value for the target data through a carrier parameter corresponding to a reference carrier in a shared HPN carrier subset to which the transmission carrier for the target data scheduled by the first scheduling signaling belongs;
obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition comprises one of the following: the value is the maximum value, and the value is the minimum value;
obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition comprises one of the following: the value is the maximum value, and the value is the minimum value;
obtaining, according to a first indication in the first scheduling signaling, the circular buffer length value for the target data, wherein the first indication is used for indicating a carrier bandwidth used by the circular buffer length value for the target data; or
obtaining, according to a reference physical resource block (PRB) number configured by the network device, the circular buffer length value for the target data.

28. The terminal according to any one of claims 19 to 27, wherein the first scheduling signaling comprises: shared HPN indication information, the shared HPN indication information is used for indicating target carrier information that shares the HPN with the transmission carrier for the target data scheduled by the first scheduling signaling.

29. A network device comprising a memory, a transceiver, and a processor, wherein
the memory is configured to store a computer program; the transceiver is configured to transmit and receive data under the control of the processor; and the processor is configured to read the computer program in the memory and perform the following steps:

determining a transmission parameter for scheduled target data;
performing transmission of the target data based on the transmission parameter for the target data;
wherein the transmission parameter comprises at least one of the following:

a transmission carrier for the target data;
a circular buffer length value for the target data; or
a new transmission or retransmission identifier for the target data.

30. A data transmission apparatus, applied to a terminal, comprising:

a receiving unit, configured to receive a first scheduling signaling sent by a network device;
a first determining unit, configured to determine, based on the first scheduling signaling, a transmission parameter for scheduled target data; and
a first transmission unit, configured to perform transmission of the target data based on the transmission parameter for the target data;
wherein the transmission parameter comprises at least one of the following:

a transmission carrier for the target data;
a circular buffer length value for the target data; or
a new transmission or retransmission identifier for the target data.

**31.** The apparatus according to claim 30, wherein the first determining unit is configured to:

determine, based on the first scheduling signaling and first configuration information of at least one carrier set sent by the network device, the transmission parameter for the scheduled target data;

wherein the first configuration information comprises at least one of the following:

information of carriers comprised in the carrier set;
shared hybrid automatic repeat request process number (HPN) carrier subset;
HPN sharing mode; or
indication information of scheduled carriers in the carrier set.

**32.** The apparatus according to claim 31, wherein the HPN sharing mode comprises at least one of the following:

semi-static mode; or
dynamic mode.

**33.** The apparatus according to claim 31, wherein the indication information of scheduled carriers comprises at least one of the following:

a subset of carriers in the carrier set that can be received simultaneously or sent simultaneously; or
indication information of a transmission mode for the target data, wherein the transmission mode comprises at least one of: single-processor mode or multi-processor mode.

**34.** The apparatus according to claim 33, wherein the single-processor mode corresponds to a first physical downlink shared channel (PDSCH) reception preparation duration, the multi-processor mode corresponds to a second PDSCH reception preparation duration, and the first PDSCH reception preparation duration is greater than the second PDSCH reception preparation duration.

**35.** The apparatus according to any one of claims 30 to 34, wherein the first determining unit is configured to implement at least one of the following:

determining the new transmission or retransmission identifier for the target data according to at least one of a first transmission carrier, a first HPN, or a first NDI indicated by the first scheduling signaling;
determining the new transmission or retransmission identifier for the target data according to at least one of the first transmission carrier, the first HPN, or the first NDI indicated by the first scheduling signaling, and at least one of a second transmission carrier, a second HPN, or a second NDI indicated by a second scheduling signaling; wherein the transmission time of the second scheduling signaling is earlier than the transmission time of the first scheduling signaling; the first transmission carrier and the second transmission carrier belong to the same shared HPN carrier subset; and the first HPN is equal to the second HPN.

**36.** The apparatus according to claim 35, wherein the determining the new transmission or retransmission identifier for the target data according to at least one of the first transmission carrier, the first HPN, or the first NDI indicated by the first scheduling signaling comprises at least one of the following:

in a case that the scheduling of the first transmission carrier by the first scheduling signaling is an initial scheduling of the shared HPN carrier subset, determining that the target data is a new transmission;
in a case that the scheduling of the first transmission carrier by the first scheduling signaling is not the initial scheduling of the shared HPN carrier subset, and the value of the first NDI is flipped, determining that the target data is a new transmission; or
in a case that the scheduling of the first transmission carrier by the first scheduling signaling is not the initial scheduling of the shared HPN carrier subset, and the value of the first NDI is not flipped, determining that the target data is a retransmission.

**37.** The apparatus according to claim 35, wherein the determining the new transmission or retransmission identifier for the target data according to at least one of the first transmission carrier, the first HPN, or the first NDI indicated by the first scheduling signaling and at least one of the second transmission carrier, the second HPN, or the second NDI indicated by the second scheduling signaling comprises at least one of the following:

in a case that the first NDI and the second NDI are inconsistent, determining that the target data is a new transmission; or

in a case that the first NDI is consistent with the second NDI, determining that the target data is a retransmission.

38. The apparatus according to any one of claims 30 to 37, wherein the first determining unit is configured to implement at least one of the following:

obtaining the circular buffer length value for the target data through a carrier parameter corresponding to the transmission carrier for the target data scheduled by the first scheduling signaling;

obtaining the circular buffer length value for the target data through a carrier parameter corresponding to a reference carrier in a shared HPN carrier subset to which the transmission carrier for the target data scheduled by the first scheduling signaling belongs;

obtaining a circular buffer length value corresponding to each carrier in the shared HPN carrier subset to which the transmission carrier for the target data scheduled by the first scheduling signaling belongs, and selecting a circular buffer length value from the obtained circular buffer length values that satisfies a first condition as the circular buffer length value for the target data, wherein the first condition comprises one of the following: the value is the maximum value, and the value is the minimum value;

obtaining, according to carrier parameters satisfying a second condition and corresponding to all carriers in the shared HPN carrier subset to which the transmission carrier for the target data scheduled by the first scheduling signaling belongs, the circular buffer length value for the target data, wherein the second condition comprises one of the following: the value is the maximum value, and the value is the minimum value;

obtaining, according to a first indication in the first scheduling signaling, the circular buffer length value for the target data, wherein the first indication is used for indicating a carrier bandwidth used by the circular buffer length value for the target data; or

obtaining, according to a reference physical resource block (PRB) number configured by the network device, the circular buffer length value for the target data.

39. The apparatus according to any one of claims 30 to 38, wherein the first scheduling signaling comprises: shared HPN indication information, wherein the shared HPN indication information is used for indicating target carrier information sharing the HPN with the transmission carrier for the target data scheduled by the first scheduling signaling.

40. A data transmission apparatus, applied to a network device, comprising:

a second determining unit, configured to determine a transmission parameter for scheduled target data; and

a second transmission unit, configured to perform transmission of the target data based on the transmission parameter for the target data;

wherein the transmission parameter comprises at least one of the following:

a transmission carrier for the target data;

a circular buffer length value for the target data; or

a new transmission or retransmission identifier for the target data.

41. A processor-readable storage medium storing a computer program, wherein the computer program is configured to cause a processor to implement the method according to any one of claims 1 to 10, and/or the method according to any one of claims 11 to 18.

Fig. 1

Fig. 2

Carrier switching gap(GAP)

Desired carrier switching
time t1

Carrier switching
delay t2

DCI-1,NDI =0

DCI-2 NDI =0

Carrier-1

PDSCH-1

PDSCH-1

DCI-2 NDI =0

Carrier-2

PDSCH-2

Fig. 3

Carrier switching
gap (GAP)

Desired carrier switching
time t1

Second carrier switching

DCI-1,NDI =0

DCI-2,NDI =0

Carrier-1

PDSCH-1

GAP

GAP

PDSCH-1

Carrier-2

PDSCH scheduling

Fig. 4

Receiving a first scheduling signaling sent by a network device — S501

Determining a transmission parameter for scheduled target data based on the first scheduling signaling — S502

Performing transmission of the target data based on the transmission parameter for the target data — S503

Fig. 5

Fig. 6

Configured carrier set

Baseband chip:
- Baseband processing CC1
- Baseband processing CC2
- Baseband processing CC3
- Baseband processing CC4

Control interface

Data interface

Band1 configuration — M1

Band2 configuration — M2

Band4 configuration — M4

RF hardware part:
- ADC
- Filtering
- Mixing
- LNA

Antenna

Baseband chip

RF chip

Fig. 7

Ind: HPN_shared_indicator

HPN = 3

DCI-1

Carrier-1

NDI-1 = 0, ind = 00

NDI is not flipped

NDI is flipped

HPN = 3

NDI-2 = 0, ind = 10     NDI-3 = 0, ind = 00     NDI-3 = 1, ind = 10

Carrier-3

DCI-2     DCI-3     DCI-4

t

Fig. 8

Configured carrier set

Fig. 9

Fig. 10

Determining a transmission parameter for scheduled target data — S1101

Performing transmission of the target data based on the transmission parameter for the target data — S1102

Fig. 11

Data transmission apparatus — 1200

Receiving unit — 1201

First determining unit — 1202

First transmission unit — 1203

Fig. 12

Processor — 1300

Memory — 1320

Bus interface

Transceiver — 1310

User interface — 1330

Fig. 13

1400

Data transmission apparatus

1401

Second determining unit

1402

Second transmission unit

Fig. 14

1500

Processor

1520

Memory

Bus interface

1510

Transceiver

Fig. 15

## INTERNATIONAL SEARCH REPORT

| International application No. |
| --- |
| **PCT/CN2024/096600** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L, H04W, G06F

Documentation searched other than minimum documentation to the extent that such documents are included in the fields searched

Electronic data base consulted during the international search (name of data base and, where practicable, search terms used)

CNKI, CNTXT, ENTXTC, ENTXT, VEN, DWPI, 3GPP, IEEE: 调度, 控制信令, 载波, 载波集合, 子载波, 传输资源, 新数据指示, 新传, 初传, 重传, 处理号, 过程号, 共享, 半静态, 动态, 循环, 存储长度, Scheduling, control signaling, carrier, carrier set, subcarrier, transmission resource, new data indication, NDI, initial transmission, retransmission, HARQ, HPN, HARQ processing number, share+, semi-static, dynamic, storage length, cycle storage length value

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019028916 A1 (HUAWEI TECHNOLOGIES CO., LTD.) 14 February 2019 (2019-02-14) description, page 9 line 1-page 16 line 28, and page 28 line 32-page 29 line 36 | 1-8, 10-26, 28-37, 39-41 |
| X | CN 106658742 A (ZTE CORP.) 10 May 2017 (2017-05-10) description, paragraphs 64-205 | 1-8, 10-26, 28-37, 39-41 |
| A | CN 113708899 A (VIVO COMMUNICATION TECHNOLOGY CO., LTD.) 26 November 2021 (2021-11-26) entire document | 1-41 |
| A | US 2021385838 A1 (QUALCOMM INC.) 09 December 2021 (2021-12-09) entire document | 1-41 |
| A | WO 2023051730 A1 (CHINA MOBILE COMMUNICATION CO., LTD., RESEARCH INSTITUTE et al.) 06 April 2023 (2023-04-06) entire document | 1-41 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 August 2024** | **30 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096600**

| Patent document cited in search report | | | Publication date (day/month/year) | Patent family member(s) | | | Publication date (day/month/year) |
|---|---|---|---|---|---|---|---|
| WO | 2019028916 | A1 | 14 February 2019 | None | | | |
| CN | 106658742 | A | 10 May 2017 | US | 2018367282 | A1 | 20 December 2018 |
| | | | | US | 10581577 | B2 | 03 March 2020 |
| | | | | WO | 2017076157 | A1 | 11 May 2017 |
| CN | 113708899 | A | 26 November 2021 | None | | | |
| US | 2021385838 | A1 | 09 December 2021 | US | 11812430 | B2 | 07 November 2023 |
| WO | 2023051730 | A1 | 06 April 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310649642